# EUROPÄISCHE PATENTANMELDUNG

(11) **EP 1 659 299 A2**
(43) Veröffentlichungstag der Anmeldung: **24.05.2006**
(21) Anmeldenummer: 05024248.6
(22) Anmeldetag: 08.11.2005
(51) Int. Cl.: F16B 19/05

(54) **Kugelbolzen**

(30) Priorität: 18.11.2004 DE 202004017923 U
(71) Anmelder: Edscha AG, 42855 Remscheid (DE)
(72) Erfinder: Borchers, Dieter, 42857 Remscheid (DE); Tekampe, Frank, 46414 Rhede (DE)
(74) Vertreter: Sparing, Rolf Klaus

(57) **Zusammenfassung**

Die Erfindung betrifft einen Kugelbolzen, umfassend einen mittleren Abschnitt (6) zum Durchsetzen einer Bohrung (7), an dessen ersten Ende (2) ein erster Kugelkopf (3) angebracht ist, einen zweiten Kugelkopf (5), der an einem zweiten Ende (4) des mittleren Abschnittes (6) ausgebildet ist, und eine an dem mittleren Abschnitt (6) ausgebildete Rändelung (17). Ein Kugelbolzen, der eine einfache und sichere Festlegung in der Bohrung bei Ausbildung eines zweiten Kugelkopfes ermöglicht, wird erfindungsgemäß dadurch geschaffen, dass ein verformbarer Nietfortsatz (22) den mittleren Abschnitt (6) über die Bohrung (7) überstehend fortsetzt.

## Beschreibung

Die Erfindung geht aus von einem Kugelbolzen nach dem Oberbegriff des Anspruchs 1.

Aus der Praxis ist für Kugelbolzen, die einen ersten Kugelkopf an einem ersten Ende eines in einer Einbaulage eine Bohrung durchsetzenden mittleren Abschnittes umfassen, bekannt, daß der Kugelbolzen in der Bohrung nur schwer sicher zu halten ist. Die bekannten Mittel zum Halten des mittleren Abschnitts des Kugelbolzens in der Bohrung erschweren oder verunmöglichen insbesondere die Ausbildung eines zweiten Kugelkopfes an einem zweiten, von dem ersten Ende abgewandten Ende des mittleren Abschnittes.

DE 198 56 133 A1 beschreibt einen Kugelbolzen mit einem ersten Kugelkopf an einem ersten Ende eines in einer Einbaulage eine Bohrung durchsetzenden mittleren Abschnitts, wobei der mittlere Abschnitt einen Nietfortsatz aus Aluminium aufweist, der über die Bohrung übersteht. An einem zweiten, von dem ersten Ende abgekehrten Ende des mittleren Abschnitts ist eine Quetschhilfe vorgesehen, die als zylindrisches Element ausgebildet ist und an deren Seitenflächen ein für das Umlegen des Nietfortsatzes erforderliches Stemmwerkzeug geführt wird. Der Kugelbolzen umfaßt weiter ein Fußteil, das an einer dem ersten Kugelkopf zugewandten Seite anliegt. Der Kugelbolzen wird dadurch festgelegt, daß das Stemmwerkzeug, durch die Quetschhilfe ausgerichtet und entlang der zylindrischen Achse der Quetschhilfe geführt, angebracht wird und durch Aufbringen von Kraft entlang der zylindrischen Achse den Nietfortsatz derart umbiegt, daß dieser teilweise auf das dem Nietfortsatz benachbarte Ende der Bohrung hin verformt wird. Nachteilig ist, daß die Quetschhilfe einen hohen Platz beansprucht und den Kugelbolzen insgesamt sehr materialaufwendig macht. Dieser Nachteil wiegt umso schwerer, weil die Quetschhilfe nur einmal, bei dem Umbiegen des Nietfortsatzes zur Befestigung des Kugelbolzens, erforderlich ist, und für die weitere Funktion des Kugelbolzens ungenutzt bleibt. Nachteilig ist weiter, daß der in der Bohrung befindliche mittlere Abschnitt nicht gegen die von dem Stemmwerkzeug aufgebrachten Kräfte gegen ein Verschieben entgegen der Einführrichtung gesichert ist.

DE 37 38 924 A1 beschreibt einen Doppelkugelbolzen, der einen ersten Kugelkopf und einen zweiten Kugelkopf sowie einen als Befestigungsbereich ausgebildeten mittleren Abschnitt umfaßt, wobei der mittlere Abschnitt des Doppelkugelbolzens in einer Bohrung eines Hebels festlegbar ist. Der mittlere Abschnitt weist eine Ringnut auf. In die Ringnut greift eine umliegende Wulst, die dadurch gebildet ist, daß in eine ringförmige Aussparung an der Oberfläche des Hebels ein geeignetes Stemmwerkzeug eingebracht wird, das an der Mantelfläche der Bohrung die Wulst entstehen und in die Ringnut eingreifen läßt. Der Doppelkugelbolzen kann zusätzlich eine Rändelung an dem mittleren Abschnitt umfassen. Nachteilig ist, daß das Verstemmen durch Bilden der Wulst in dem Hebel aufwendig auszuführen ist und ein weiches, plastisches Material für den Hebel voraussetzt. Nachteilig ist weiter, daß die Kraft bei dem Verstemmen symmetrisch anzubringen ist, da sonst die Wulst die Ringnut nicht vollständig umgibt und dann der Doppelkugelbolzen nicht sicher, insbesondere nicht verdrehsicher gelagert ist. Für den Fall, daß die beiden Kugelköpfe zueinander exzentrisch angeordnet sind, ist die Festlegung des Doppelkugelbolzens kaum noch möglich, weil das Stemmwerkzeug in zu großen Abstand von dem mittleren Abschnitt angebracht werden muß, um die Wulst in der Ringnut ausbilden zu können.

Es ist die Aufgabe der Erfindung, einen Kugelbolzen nach dem Oberbegriff des Anspruchs 1 anzugeben, der eine einfache und sichere Festlegung in der Bohrung bei Ausbildung eines zweiten Kugelkopfes ermöglicht.

Diese Aufgabe wird erfindungsgemäß für dem Kugelbolzen nach dem Oberbegriff des Anspruchs 1 mit den kennzeichnenden Merkmalen des Anspruchs 1 gelöst.

Der Nietfortsatz erlaubt eine einfache Festlegung des Bolzens, auch wenn der Bolzen neben dem ersten Kugelkopf einen zweiten Kugelkopf aufweist.

Es ist insbesondere von Vorteil, daß der Nietfortsatz umgebogen werden kann, ohne auf den anliegenden Bereich eine zu hohe verformende Kraft ausüben zu müssen. Damit läßt sich ein mit dem Nietfortsatz versehener Kugelbolzen auch dann anbringen, wenn das Material in dem Umgebung der Bohrung nicht oder nur schwer durch Verstemmen verformbar ist, beispielsweise, wenn die Bohrung in Gußeisen ausgebildet ist. Insbesondere läßt sich der Anwendungsbereich derartiger Kugelbolzen auf im wesentlichen beliebige Materialien ausdehnen. Vorteilhaft ist weiter, daß bereits ein geringes Umbiegen des Nietfortsatzes den Kugelbolzen sicher festzulegen ermöglicht.

Der die Bohrung überstehende verstemmte Nietfortsatz bietet die Möglichkeit, optisch zu kontrollieren, ob die Verstemmung in ausreichendem Maß und insbesondere symmetrisch erfolgt ist.

Weiter vorteilhaft ist, daß durch den Nietfortsatz auch Kugelbolzen mit versetzt zueinander angeordneten Kugelköpfen sicher festlegbar sind.

Die Rändelung, die den mittleren Abschnitt des Kugelbolzens zumindest auf einem Teilabschnitt umgibt, bietet den Vorteil, den Kugelbolzen bei dem Umlegen des Nietfortsatzes zu halten, so daß sich die Befestigung des Kugelbolzens in der Bohrung vereinfacht. Fallweise kann die Rändelung allein bereits ausreichend sein, dem Kugelbolzen in der Bohrung zu halten, so daß auf eine Verstemmung des Nietfortsatzes zur weiteren Sicherung des Kugelbolzens in der Bohrung verzichtet werden kann.

Die Rändelung verhindert auch vorteilhafterweise ein Drehen des mittleren Abschnitts des Kugelbolzens in der Bohrung. Die Rändelung ermöglicht als weiteren Vorteil einen spielfreien Sitz des eingeführten Kugelbolzens in der Bohrung.

Aufgrund der Rändelung des mittleren Abschnitts läßt sich der Kugelbolzen schneller in die Bohrung einführen als bei einem mit einem Außengewinde versehenen Kugelbolzen, zu dem die Bohrung ein passendes Innengewinde aufzuweisen hätte, in das das Außengewinde einzuschrauben wäre.

Das für das Umbiegen des Nietfortsatzes vorgesehene Stemmwerkzeug kann aufgrund der Rändelung einfacher ausgebildet werden, beispielsweise als Hohlzylinder, so daß auf eine Führung in Form einer Quetschhilfe verzichtet werden kann. Der Kugelbolzen wird damit nicht nur durch die wegfallende Quetschhilfe einfacher und beansprucht weniger Material, sondern bietet den weiteren Vorteil, anstelle der Quetschhilfe an dem zweiten Ende einen zweiten Kugelkopf ausbilden zu können, so daß ein Doppelkugelbolzen entsteht, dessen erster und zweiter Kugelkopf je ein Kugelgelenk aufnehmen. Der zweite Kugelkopf kann dabei als Führungshilfe für das Stemmwerkzeug vorgesehen sein, so daß sich der Doppelkugelbolzen in seiner Ausgestaltung vereinfacht. Das Stemmwerkzeug kann auch deshalb einfacher ausgebildet werden, weil der Durchmesser des zweiten Kugelkopfes geringer als der Durchmesser des mittleren Abschnitts ist, so daß bereits ein einfach ausgebildetes Stemmwerkzeug für die Festlegung des Doppelkugelbolzens in der Bohrung ausreichend ist.

Vorzugsweise ist an dem mittleren Abschnitt ein Fußteil ausgebildet, das an einer dem ersten Kugelkopf zugewandten ersten Seite, beispielsweise eines Hebels, an dem der Kugelbolzen in der Bohrung befestigt wird, anliegt. Das Fußteil beschränkt dabei das Einführen des mittleren Abschnitts und bietet einen Anschlag.

Vorzugsweise ist der Nietfortsatz zwischen dem mittleren Abschnitt und dem zweiten Kugelkopf ausgebildet und liegt dabei, insbesondere, wenn ein Fußteil vorgesehen ist, dem Fußteil gegenüber. Wird bei dem Verstemmen des Nietfortsatzes eine Kraft auf den Doppelkugelbolzen in einer Richtung ausgeübt, so kann auf das Fußteil eine Kraft in der Gegenrichtung ausgeübt werden, die verhindert, daß aufgrund der Kraft auf den Nietfortsatz der Doppelkugelbolzen aus der Bohrung herausgedrückt wird. Das Fußteil bietet hierfür für die Gegenkraft eine breite Anlagefläche.

Vorzugsweise weist der Nietfortsatz eine Führungshilfe für das Anbringen des Stemmwerkzeugs auf, so daß das Stemmwerkzeug leicht und insbesondere bei Serienfertigungen reproduzierbar angebracht werden kann, eine definierte Verformung des Nietfortsatzes ermöglicht und bei Kraftausübung auf den Nietfortsatz von diesem nicht abgleitet.

Auf besonders einfache Weise ist die Führungshilfe als erste Führungshilfe durch eine oder mehrere, symmetrisch entlang des Randes des Nietfortsatzes verteilte Einkerbungen ausgebildet. In diese Einkerbungen kann dann ein Endabschnitt des Stemmwerkzeugs eingreifen, bevor Kraft auf das Stemmwerkzeug ausgeübt wird und das Stemmwerkzeug die Einkerbungen über den Außenumfang des Nietfortsatzes verformt, so daß die verformten Einkerbungen seitlich über den Nietfortsatz überstehen. Alternativ oder ergänzend hierzu kann auch der zweite Kugelkopf des Doppelkugelbolzens als eine zweite Führungshilfe für das Stemmwerkzeug dienen.

Vorzugsweise greift die Rändelung des mittleren Abschnitts mit einer Gegenrändelung der Bohrung zusammen, wobei die Gegenrändelung der Bohrung durch die Rändelung des mittleren Abschnitts bei dem Einführen des Kugelbolzens in die Bohrung eingeschnitten wird. Auf diese Weise ist einfach ein zu der Rändelung komplementäres, die Rändelung sicher haltendes Profil zu erhalten, in dem die Rändelung verdrehsicher gehalten werden kann.

Vorzugsweise weist der mittlere Abschnitt eine Nut auf, beispielsweise eine diesen radial umgebende Radialnut, in der das bei dem Einschneiden der Rändelung verdrängte Material der Bohrung zumindest teilweise aufgenommen wird.

Vorzugsweise ist die Nut dem Fußteil benachbart angeordnet, so daß das verdrängte Material von dem Fußteil zu überdecken ist.

Alternativ oder ergänzend zu der Nut kann das bei dem Einschneiden der Rändelung verdrängte Material in einer Aufweitung der Bohrung aufgenommen werden. Die Aufweitung kann innerhalb der Bohrung oder als abgeschrägte Kante, insbesondere als Fase, an einer Kante an einem Ende der Bohrung ausgebildet sein.

Weitere Vorteile und Merkmale der Erfindung ergeben sich aus den abhängigen Ansprüchen sowie aus der Beschreibung eines Ausführungsbeispiels.

Die Erfindung wird nachstehend mit Bezug auf die anliegende Zeichnung anhand eines bevorzugten Ausführungsbeispiels eines Kugelbolzens näher beschrieben und erläutert.

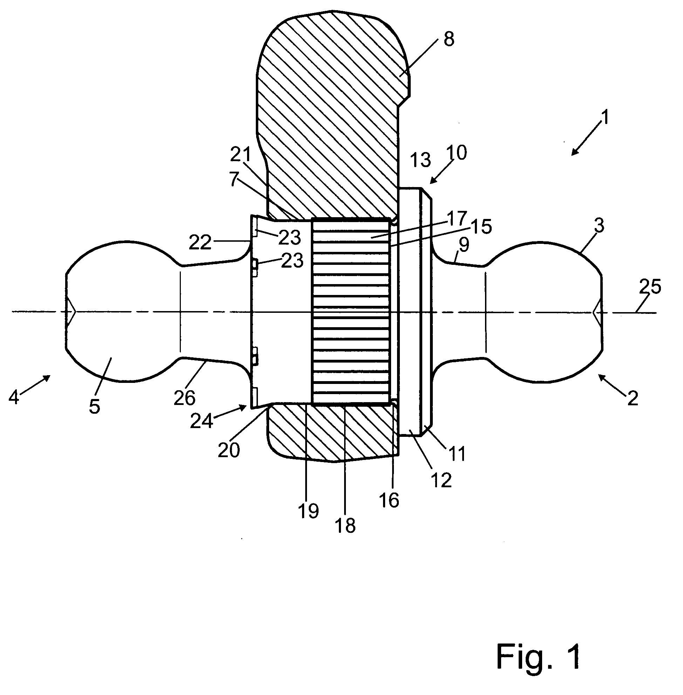

- Fig.1: zeigt eine Seitenansicht eines Ausführungsbeispiels eines erfindungsgemäßen Kugelbolzens in einer geschnitten dargestellten Einbaustellung.

Fig. 1 zeigt einen Kugelbolzen 1, der an einem ersten Ende 2 einen ersten Kugelkopf 3 und an einem zweiten Ende 4 einen zweiten Kugelkopf 5 umfaßt. Ein zwischen dem ersten Ende 2 und dem zweiten Ende 4 befindlicher mittlerer Abschnitt 6 durchsetzt eine Bohrung 7 eines geschnitten dargestellten Hebels 8, beispielsweise eines Antriebshebels einer Heckklappe eines Kraftfahrzeugs. An dem ersten Kugelkopf 3 greift eine nicht dargestellte, mit dem ersten Kugelkopf 3 ein erstes Kugelgelenk bildende erste Pfanne eines Antriebs, beispielsweise eines Kolbens eines Hydraulikzylinders, an. An dem zweiten Kugelkopf 5 greift eine nicht dargestellte, mit dem zweiten Kugelkopf 5 ein zweites Kugelgelenk bildende zweite Pfanne einer Gasfeder, eines Pneumatikzylinders oder eines Winkelgebers an, die zusammen mit dem Antrieb die Bewegung des Hebels 8 steuern.

An den ersten Kugelkopf 3 anschließend befindet sich ein erstes Zwischenteil 9, das nach Art eines Halses oder eines Kegelstumpfes ausgebildet ist und sich von dem ersten Kugelkopf 3 fort verbreitert. An das erste Zwischenteil 9 schließt sich ein Fußteil 10 ein, dessen erster, auf den ersten Kugelkopf 3 hin weisender Abschnitt 11 sich verjüngt, während ein zweiter, von dem ersten Kugelkopf 3 fort weisender Abschnitt 12 des Fußteils einen konstanten Durchmesser aufweist. Eine Seite 13 des zweiten Abschnitts 12 des Fußteils 10 liegt auf einer ersten, auf den ersten Kugelkopf 3 hin weisenden Seite 14 des Hebels 8 an.

An den zweiten Abschnitt 12 des Fußteils 10 schließt sich in Richtung auf den zweiten Kugelkopf 5 eine Nut 15 an, die als Radialnut ausgebildet ist und den mittleren Abschnitt 6 vollständig umläuft. Die Nut 15 befindet sich in der dargestellten Einbaustellung des Kugelbolzens 1 an einem, dem ersten Kugelkopf 3 zugewandten ersten Ende 16 der Bohrung 7. Von der Nut 15 an folgt eine Rändelung 17, die über einen Teilabschnitt 18 des mittleren Abschnitts 6 ausgebildet ist. Auf das zweite Ende 4 des Kugelbolzens hin schließt sich an den Teilabschnitt 18 mit der Rändelung 17 ein rändelungsfreier Abschnitt 19 des mittleren Abschnitts 6 an, der ein zweites, dem zweiten Kugelkopf 5 zugewandtes Ende 20 der Bohrung 7 durchsetzt und über eine zweite Seite 21 des Hebels 8 übersteht, so daß ein Nietfortsatz 22 gebildet wird. Es ist weiter erkennbar, daß die Länge L₁ des Teilabschnitts 18 mit der Rändelung 17 sich zu der Länge L₂ der Bohrung 7 wie 40 / 60 verhält. Es versteht sich, daß für das Verhältnis L₁ / L₂ auch von dem dargestellten Verhältnis 40 / 60 auch andere Verhältnisse, wie 30 / 70 oder 50 / 50 bzw. 1 / 2 möglich sind, insbesondere, sofern die nur auf den Teilabschnitt 18 beschränkte Rändelung in der Lage ist, die bei der Festlegung des Kugelbolzens 1 insbesondere durch die zusätzlichen Nietwerkzeuge aufgebrachten Kräfte aufnehmen kann. Anstelle der nur den Teilabschnitt 18 einnehmenden Rändelung 17 kann sich diese auch über die gesamte Länge L₂ der Bohrung 7 erstrecken.

Der Nietfortsatz 22 ist in der dargestellten Einbaulage des Kugelbolzens auf die zweite Seite 21 des Hebels 8 hin abschnittsweise umgebogen und verstemmt worden. Dazu wurde ein nicht dargestelltes Stemmwerkzeug benutzt, beispielsweise ein an einem Ende offenes Rohr. Das Stemmwerkzeug wurde in zwei Führungshilfen eingesetzt. Als erste Führungshilfe wirkt der zweite Kugelkopf 5 als zweite, von der ersten Führungshilfe unabhängige Führungshilfe wirken die als sechs Einkerbungen 23 an dem Rand 24 des Nietfortsatzes 22 ausgebildet sind, wobei einander benachbarte Einkerbungen einen Winkel von ca. 60° einschließen. In die sechs Einkerbungen 23 greifen zu den Einkerbungen 23 komplementäre Bereiche des Stemmwerkzeugs, so daß dieses einen sicheren Halt an dem Nietfortsatz 22 erhält und der Nietfortsatz 22 insbesondere in der Nähe der Einkerbungen 23 verformt wird. Der in Fig. 1 erkennbare, verformte Nietfortsatz 22 verhindert zusammen mit dem Fußteil 10 eine Verschiebung des Kugelbolzens 1 entlang einer Achse 25. An den Nietfortsatz 22 schließt sich auf den zweiten Kugelkopf 5 hin ein zweites, sich auf den zweiten Kugelkopf 5 hin verjüngendes Zwischenteil 26 an.

Wie in Fig. 1 erkennbar, sind der erste Kugelkopf 3 und der zweite Kugelkopf 5 spiegelsymmetrisch zu einer nicht dargestellten, in dem Hebel 8 verlaufenden und im wesentlichen zu der ersten Seite 14 bzw. der zweiten Seite 21 parallelen Ebene; insbesondere ist der Durchmesser D₁ des ersten Kugelkopfes 3 gleich dem Durchmesser D₂ des zweiten Kugelkopfes 5. Weiter ist der Durchmesser D₂ des zweiten Kugelkopfes 5 geringer als der Durchmesser D₃ der Bohrung 7. Damit ist der zweite Kugelkopf 5 durch ein geschlossenes Loch, aber auch durch ein Loch mit von der Kreisform abweichender Kontur, in die Bohrung 7 einführbar.

Der Kugelbolzen 1 ist zu der Achse 25 symmetrisch ausgebildet und bis auf die Rändelung 17 und die Einkerbungen 23 zu der Achse rotationssymmetrisch. Der Kugelbolzen 1 besteht aus kaltgezogenem Stahl und ist als Drehteil oder durch Hinterschneidungen als einteiliges Stück hergestellt. Eine Herstellung des Doppelkugelbolzens ist auch durch Kaltfließpressen möglich, wobei die Kugeln unabhängig von dem Rest des Doppelkugelbolzens hergestellt werden und nachträglich an den Rest des Doppelkugelbolzens beispielsweise durch Aufschweißen befestigt werden können.

Die Funktionsweise der Erfindung läßt sich anhand des vorstehend beschriebenen Ausführungsbeispiels wie folgt erläutern:

Zuerst wird der Kugelbolzen 1, mit dem zweiten Kugelkopf 5 voran, in einer mit der Achse 25 ausgefluchteten Einführungsrichtung R in die Bohrung 7 soweit eingeführt, bis die Seite 13 des zweiten Abschnitts 12 des Fußteils 10 an der ersten Seite 14 des Hebels 8 anliegt und als Anschlag ein weiteres Einführen begrenzt. Dabei schneidet die Rändelung 17 in das Material der Bohrung 7 eine nicht dargestellte, zu der Rändelung 17 komplementäre Gegenrändelung, wobei Material verdrängt wird, das sich zumindest teilweise in der Nut 15 sammelt. Alternativ oder ergänzend hierzu kann in der Bohrung 7 eine entsprechende Umfangsprofilierung zur Aufnahme der verdrängten Materie vorgesehen sein, insbesondere, wenn nicht das gesamte verdrängte Material sich in die Rändelung drückt.

Anschließend wird durch Anbringen des Stemmwerkzeugs, dessen komplementäre Bereiche in die Einkerbungen 23 des Nietfortsatzes 22 eingreifen, eine Kraft entgegen der Einführungsrichtung R entlang der Achse 25 ausgeübt, die ausreicht, um den Nietfortsatz 22 zumindest in der Nähe der Einkerbungen 23 auf die zweite Seite 21 des Hebels 8 zu verformen. Weil der Durchmesser D₂ des zweiten Kugelkopfes 5 geringer als der Durchmesser D₃ der Bohrung 7 ist und der Nietfortsatz 22 die Bohrung 7 ausfüllt, ist das Stemmwerkzeug leicht so anzubringen, daß es nicht den zweiten Kugelkopf 5 berührt und beschädigt. Gegen ein Herausdrücken des Kugelbolzens 1 entgegen der Einführungsrichtung R ist dieser durch die Rändelung 17 gesichert, die dem Kugelbolzen 1 in der Bohrung 7 einen sicheren Halt bietet. Hierfür ist es ausreichend, wenn sich die Rändelung 17 nur über den Teilabschnitt 18 des mittleren Abschnitts 6 des Kugelbolzens 1 erstreckt.

Der verformte Nietfortsatz 22 zusammen mit dem Fußteil 10 verhindern, daß sich der mittlere Abschnitt 6 entlang der Achse 25 bewegen kann, die Rändelung 17 verhindert, daß der mittlere Abschnitt 6 um die Achse 25 rotieren kann, so daß insgesamt der Kugelbolzen 1 in der Bohrung 7 sicher gehalten wird.

Die Erfindung wurde vorstehend anhand eines Ausführungsbeispiels beschrieben, bei dem die Nut 15 das bei dem Einschneiden der'Rändelung 17 verdrängte Material der Bohrung 7 aufnimmt. Es versteht sich, daß anstelle oder ergänzend zu der Nut 15 das erste Ende 16 der Bohrung 7 soweit verbreitert sein kann, daß das verdrängte Material aufgenommen wird.

Die Erfindung wurde vorstehend anhand eines Ausführungsbeispiels erläutert, bei dem eine Achse des ersten Kugelkopfes 3, eine Achse des zweiten Kugelkopfes 5 und die Achse 25 des Kugelbolzens 1 zusammenfallen. Es versteht sich, daß die Achse des ersten Kugelkopfes 3 und die Achse des zweiten Kugelkopfes 5 auch versetzt zu einander angeordnet sein können, so daß ein Exzenterbolzen entsteht. Es versteht sich weiter, daß auch die Achse 25 des Kugelbolzens 1 bezüglich der Achse des ersten Kugelkopfes 3 und / oder der Achse des zweiten Kugelkopfes 5 versetzt angeordnet sein kann.

## Patentansprüche

1. Kugelbolzen, umfassend
einen mittleren Abschnitt (6) zum Durchsetzen einer Bohrung (7), an dessen ersten Ende (2) ein erster Kugelkopf (3) angebracht ist,
einen zweiten Kugelkopf (5), der an einem zweiten Ende (4) des mittleren Abschnittes (6) ausgebildet ist, und
eine an dem mittleren Abschnitt (6) ausgebildete Rändelung (17),
**dadurch gekennzeichnet,**
**daß** ein verformbarer Nietfortsatz (22) den mittleren Abschnitt (6) über die Bohrung (7) überstehend fortsetzt.

2. Kugelbolzen nach Anspruch 1, **dadurch gekennzeichnet, daß** zwischen dem ersten Kugelkopf (3) und dem mittleren Abschnitt (6) ein Fußteil (10) ausgebildet ist, und daß das Fußteil (10) an einer dem ersten Kugelkopf (3) zugewandten ersten Seite (14) anliegt.

3. Kugelbolzen nach Anspruch 1 oder 2, **dadurch gekennzeichnet, daß** der Nietfortsatz (22) zwischen dem mittleren Abschnitt (6) und dem zweiten Kugelkopf (5) ausgebildet ist.

4. Kugelbolzen nach einem der Ansprüche 1 bis 3, **dadurch gekennzeichnet, daß** der Nietfortsatz (22) eine erste Führungshilfe für ein Stemmwerkzeug zum Verformen des Nietfortsatzes (22) aufweist.

5. Kugelbolzen nach Anspruch 4, **dadurch gekennzeichnet, daß** die erste Führungshilfe eine Einkerbung (23) an einem Rand (24) des Nietfortsatzes (22) umfaßt, und daß das Stemmwerkzeug bei dem Verformen in die mindestens eine Einkerbung (23) eingreift.

6. Kugelbolzen nach einem der Ansprüche 1 bis 5, **dadurch gekennzeichnet, daß** die Bohrung (6) an einem von dem Nietfortsatz (22) abgewandten Ende (16) eine Aufweitung aufweist.

7. Kugelbolzen nach einem der Ansprüche 1 bis 6, **dadurch gekennzeichnet, daß** der mittlere Abschnitt (6) eine Nut (15) aufweist, und daß die Nut (15) den mittleren Abschnitt (6) radial umläuft.

8. Kugelbolzen nach Anspruch 7, **dadurch gekennzeichnet, daß** die Nut (15) an das Fußteil (10) anschließend angeordnet ist.

9. Kugelbolzen nach einem der Ansprüche 1 bis 8, **dadurch gekennzeichnet, daß** die Rändelung (17) über einen Teilabschnitt (18) des mittleren Abschnitts (6) ausgebildet ist, und daß eine Länge (L₁) des Teilabschnitts (18) ca. die Hälfte der Länge (L₂) der Bohrung (7) umfaßt.

10. Kugelbolzen nach einem der Ansprüche 1 bis 9, **dadurch gekennzeichnet, daß** die Rändelung (17) des mittleren Abschnitts (6) mit einer Gegenrändelung der Bohrung (7) zusammengreift, und daß die Gegenrändelung der Bohrung (7) durch die Rändelung (17) des mittleren Abschnitts (6) in die Bohrung (7) einschneidbar ist.

11. Kugelbolzen nach einem der Ansprüche 1 bis 10, **dadurch gekennzeichnet, daß** der zweite Kugelkopf (5) einen geringeren Durchmesser (D₂) als der Durchmesser (D₃) der Bohrung (6) aufweist.

12. Kugelbolzen nach einem der Ansprüche 1 bis 11, **dadurch gekennzeichnet, daß** der Durchmesser (D₁) des ersten Kugelkopfes (3) gleich dem Durchmesser (D₂) des zweiten Kugelkopfes (5) ist.

13. Kugelbolzen nach einem der Ansprüche 1 bis 12, **gekennzeichnet durch** einen einteiligen Körper.

14. Kugelbolzen nach einem der Ansprüche 1 bis 13, **gekennzeichnet durch** eine zu einer **durch** die Bohrung (7) definierten Achse (25) im wesentlichen symmetrischen Ausbildung.

15. Kugelbolzen nach einem der Ansprüche 1 bis 14, **gekennzeichnet durch** einen Körper aus Stahl.

16. Kugelbolzen nach einem der Ansprüche 1 bis 15, **dadurch gekennzeichnet, daß** der zweite Kugelkopf (5) als zweite Führungshilfe für ein Stemmwerkzeug ausgebildet ist.

17. Kugelbolzen nach einem der Ansprüche 1 bis 16, **dadurch gekennzeichnet, daß** der erste Kugelkopf (3) eine Achse aufweist, daß der zweite Kugelkopf (5) eine Achse aufweist, und daß die Achse des ersten Kugelkopfes (3) bezüglich der Achse des zweiten Kugelkopfes (5) versetzt angeordnet ist.

18. Kugelbolzen nach Anspruch 17, **dadurch gekennzeichnet, daß** eine von den Achsen des ersten Kugelkopfes (3) oder des zweiten Kugelkopfes (5) bezüglich einer durch die Bohrung (7) definierten Achse (25) versetzt angeordnet ist.
